# FASCICULE DE BREVET EUROPEEN

(11) **EP 1 907 091 B1**
(45) Date de publication et mention de la délivrance du brevet: **08.09.2010**
(21) Numéro de dépôt: 06777937.1
(22) Date de dépôt: 24.07.2006
(51) Int. Cl.: B01D 21/24

(54) **DISPOSITIF DE SEPARATION GRAVITAIRE POUR LE TRAITEMENT DES EAUX**
SCHWERKRAFT-TRENNVORRICHTUNG ZUR WASSERBEHANDLUNG
GRAVITATIONAL SEPARATION DEVICE FOR WATER TREATMENT

(30) Priorité: 25.07.2005 FR 0507889
(43) Date de publication de la demande: 09.04.2008
(73) Titulaire: OTV SA, 94417 Saint-Maurice Cedex (FR)
(72) Inventeur: ESSEMIANI, Karim, F-92100 Boulogne (FR); IBORRA, Olivier, F-78530 Buc (FR); BADARD, Michel, F-92140 Clamart (FR)
(74) Mandataire: Larcher, Dominique
(86) Numéro de dépôt international: PCT/EP2006/064592
(87) Numéro de publication internationale: WO 2007/012633

(56) Documents cités:
- US-A- 2 961 099
- US-A- 2 961 100
- US-A- 3 136 724
- US-A- 3 717 257

## Description

L'invention concerne le domaine de la conception et de la réalisation des installations pour le traitement des eaux en vue de leur épuration.

Plus précisément l'invention concerne un nouveau dispositif de séparation gravitaire des eaux. De tels dispositifs sont connus de l'homme de l'art sous l'appellation « clarificateurs » ou « décanteurs ».

Le bon fonctionnement des stations d'épuration est conditionné par le bon fonctionnement hydraulique des ouvrages qui les constituent. Ceci est particulièrement vrai notamment pour les clarificateurs qui permettent une séparation gravitaire des particules solides présentes dans les eaux à traiter.

Les caractéristiques principales d'un ouvrage de clarification sont définies principalement par :
sa forme géométrique, qui est généralement circulaire, carrée ou rectangulaire ;
le positionnement de ses moyens d'alimentation en eaux à clarifier qui est généralement central ou périphérique ;
son chicanage interne ;
son système de récupération des boues / flocs / particules décantées qui est généralement constitué par un système de raclage ou de succion ;
son système de récupération des eaux clarifiées qui est généralement positionné au centre de l'ouvrage ou à la périphérie de celui-ci

L'efficacité de ces ouvrages peut être optimisée grâce à certaines options telles que notamment des lamelles inclinées prévues dans l'ouvrage qui permettent d'améliorer les phénomènes de décantation et de clarification.

Les clarificateurs présentant un bassin circulaire sont abondamment utilisés pour procéder à la séparation gravitaire des eaux en vue de l'obtention d'une phase liquide épurée et d'une phase essentiellement solide constituée des particules en suspension initialement présentes dans l'eau. De telles particules en suspension peuvent être constituées par des particules solides, telles que par exemple du sable, et/ou par des flocs biologiques lorsque la clarification a été précédée d'une étape de traitement biologique des eaux.

Ainsi, la demande de brevet US-2 961 099 décrit un clarificateur circulaire pour la séparation de particules en suspension d'un liquide, présentant une paroi circulaire et un fond, une jupe circulaire verticale espacée dudit fond et de ladite paroi et définissant une chambre annulaire s'ouvrant en partie inférieure dans le bassin, des moyens d'évacuation de la phase liquide clarifiée, des moyens formant canal d'alimentation des eaux à traiter dans le bassin prévus à la périphérie de celui-ci et pourvus d'une pluralité d'orifices prévus dans le plancher dudit canal, orifices sous lesquels sont prévus des plaques déflectrices positionnées horizontalement et des moyens d'évacuation des particules décantées.

Dans ce type de clarificateur, les eaux à traiter arrivent dans l'ouvrage par le canal d'alimentation périphérique, passent par les orifices prévus dans celui-ci et rencontrent les plaques déflectrices horizontales. La présence d'une jupe circulaire verticale permet alors d'inculquer aux eaux une distribution verticale. Une fois passée ladite jupe, les eaux retrouvent une distribution horizontale. La jupe permet ainsi de minimiser les courts-circuits au cours desquels l'eau arrivant par le canal d'alimentation repart dans la goulotte d'évacuation sans avoir eu le temps de décanter.

Les eaux traitées dans un clarificateur de ce type connaissent donc un mouvement que l'on peut qualifier de « bidimensionnel » au sein du bassin du clarificateur, c'est-à-dire un mouvement essentiellement horizontal puis essentiellement vertical.

Ce type de clarificateur présente toutefois l'inconvénient de donner aux eaux transitant sous la jupe un mouvement horizontal susceptible de perturber le lit de boues présent au fond du bassin et constitué par les matières décantées et non encore évacuées par les moyens d'évacuation prévus à cet effet, et d'entraîner dans certains cas une remise en suspension de celles-ci, ce qui va à l'encontre de l'objectif premier poursuivi par de tels ouvrages.

De plus, on observe, du fait du mouvement « bidimensionnel » des eaux, une répartition spatiale relativement inégale des matières en suspension dans ce type d'ouvrage. Une telle répartition inégale conduit à la nécessité d'augmenter les temps de séjour des eaux à traiter dans de tels dispositifs et/ou à surdimensionner ceux-ci.

Par ailleurs, en cas de variations élevées du débit des eaux à traiter entrant dans l'ouvrage, ce type de clarificateur présente également l'inconvénient de montrer une efficacité variable. Notamment, le chemin parcouru par les eaux après leur passage sous la jupe peut varier grandement en fonction du débit, ce qui peut entraîner des courts-circuits plus ou moins importants et, corollairement, une diminution d'efficacité de l'ouvrage.

Un objectif de la présente invention est donc de proposer une nouvelle architecture de dispositif de séparation gravitaire, permettant d'éviter la remise en suspension des matières décantées.

Un autre objectif de la présente invention est également de minimiser les courts circuits des eaux à traiter, c'est-à-dire leur retour vers la goulotte d'évacuation des eaux dès leur arrivée dans le bassin.

Un autre objectif de la présente invention est aussi de proposer un tel dispositif permettant une bonne équirépartition des eaux à traiter, et donc des matières en suspension qu'elles contiennent, au sein de leur bassin.

Un autre objectif de la présente invention est de ne pas adjoindre de moyens d'agitation mécanique à ce type de dispositif dans le but d'obtenir une telle équirépartition. En effet, l'adjonction de tels moyens mécaniques complexifie la réalisation de tels ouvrages et augmentent notablement leur coût de fabrication et de maintenance.

Encore un objectif de la présente invention est de proposer un clarificateur amélioré présentant un coût de réalisation plus faible que ceux de l'art antérieur. Notamment, un objectif de l'invention est de décrire un tel clarificateur pouvant être pourvu d'un bassin à un fond quasiment plat, tout en autorisant une vitesse de passage dans celui-ci plus élevée que les vitesses permises par les clarificateurs de l'art antérieur, et un volume d'ouvrage plus petit que ceux-ci tout en permettant une même efficacité de traitement.

Un autre objectif de la présente invention est d'améliorer la distribution des temps de séjour des eaux dans l'ouvrage en réduisant au maximum les courts-circuits et les zones mortes de façon à améliorer la décantation des particules contenues dans celles-ci.

Un autre objectif de la présente invention est d'améliorer la décantation des particules présentes dans les eaux, en autorisant une filtration tangentielle de celles-ci à travers le lit de boue présent dans le bassin.

Egalement un objectif de la présente invention est de réduire l'énergie cinétique verticale des eaux entrant dans l'ouvrage afin d'éviter la remise en suspension du lit de boue décantée, tout particulièrement en période de forte charge.

Ces différents objectifs sont atteints grâce à l'invention qui concerne un Dispositif de séparation gravitaire pour le traitement des eaux permettant de séparer des particules en suspension d'une phase liquide, ledit dispositif comprenant un bassin circulaire, au moins un canal d'alimentation en eaux dudit bassin prévu à la périphérie de celui-ci, une pluralité d'orifices prévus dans le plancher dudit canal, des moyens formant plaques déflectrices prévues sous lesdits orifices, des moyens formant jupe prévus à distance de la paroi interne dudit bassin , des moyens d'évacuation de ladite phase liquide et des moyens d'évacuation desdites particules séparées,
**caractérisé en ce que** lesdits moyens formant jupe sont inclinées vers l'intérieur dudit bassin selon un angle α compris entre 5° et 80 ° par rapport à la verticale.

Ainsi, la présente invention se distingue de l'art antérieur essentiellement par la caractéristique selon laquelle la jupe ne présente plus une position verticale, mais est inclinée par rapport à la verticale.

Une telle inclinaison de la jupe permet d'éviter la perturbation du lit de boues par les eaux transitant sous celle-ci et la remise en suspension de matières déjà décantées et non encore évacuées par les moyens prévus à cet effet.

Une telle inclinaison de la jupe permet également de minimiser l'apparition de courts-circuits.

Une telle inclinaison de jupe permet également de donner un mouvement tridimensionnel à l'écoulement des eaux à l'intérieur de l'ouvrage.

Préférentiellement, ledit angle α d'inclinaison de la jupe par rapport à la verticale est compris entre environ 30° et environ 60°.

Selon une caractéristique préférentielle de l'invention, lesdits orifices prévus dans le plancher du canal d'alimentation présentent un diamètre compris entre 50 et 200 mm. Egalement préférentiellement, lesdits orifices présentent une hauteur (correspondant à l'épaisseur du plancher du canal d'alimentation) comprise entre 150 et 600 mm.

En pratique, les dimensions de ces orifices seront choisis de façon telle que le rapport entre la vitesse observée par les eaux dans le canal d'alimentation et celle observée par ces mêmes eaux dans les orifices prévus dans le plancher de celui-ci provoque une perte de charge suffisante. On notera que la perte de charge provoquée par les dimensions particulières des orifices selon la présente invention pourra ne pas être constante. De telles dimensions particulières permettent de rompre l'écoulement horizontal des eaux dans le canal d'alimentation et d'inculquer à celles-ci une direction présentant une composante essentiellement verticale qui permet de maîtriser la direction de l'écoulement des eaux en amont des moyens formant plaques déflectrices. Ceci est particulièrement appréciable, notamment lorsque au niveau du point d'entrée des eaux dans le canal d'alimentation les eaux sont dirigées dans directions opposées (ce cas de figure est mis en oeuvre de façon classique dans les clarificateurs de grandes dimensions).

La perte de charge provoquée par ces dimensions particulières des orifices et le fait que celles-ci permettent d'inculquer aux eaux un mouvement ayant une composante verticale permet d'obtenir une bonne équirépartition de ces eaux, et donc des particules en suspension, qu'elles contiennent dans le bassin.

Egalement préférentiellement, lesdits orifices du canal d'alimentation des eaux à traiter sont espacés les uns des autres d'une distance essentiellement constante comprise entre 500 et 3000 mm.

Une telle caractéristique concourre également à l'obtention d'une perte de charge suffisante pour favoriser la bonne équirépartition des eaux dans le bassin.

Bien que les orifices du canal d'alimentation en eaux à traiter pourront présenter, de façon classique un axe vertical, au moins certains de ces orifices, préférentiellement tous, présentent un axe incliné tangentiellement d'un angle β1 inférieur à 45° par rapport à la verticale.

Cette caractéristique permet de provoquer un écoulement essentiellement hélicoïdal des eaux dans le bassin c'est-à-dire de conférer auxdites eaux un mouvement rotationnel tridimensionnel de celles-ci dans l'ouvrage.

Ce type d'écoulement permet d'augmenter la longueur du parcours hydraulique des eaux dans le clarificateur et ainsi d'augmenter la distribution des temps de séjour « actifs » induisant ainsi une meilleure décantation. Ceci permet aussi de favoriser encore l'équirépartition des eaux à traiter au sein du clarificateur. Enfin un tel écoulement tridimensionnel permet aussi de favoriser la filtration tangentielle de l'effluent à travers le lit de boues et d'améliorer l'efficacité de l'épaississement.

Selon une variante de l'invention, au moins certains desdits orifices, préférentiellement tous, présentent aussi un axe incliné radialement d'un angle β2 inférieur à 45° par rapport à la verticale.

Une telle caractéristique permet d'accentuer la composante radiale du mouvement inculqué aux eaux.

Les moyens formant plaques déflectrices prévus sous les orifices seront prévus à une distance de ceux-ci suffisante pour ne pas provoquer d'augmentation de perte de charge des eaux mais suffisamment faible pour réduire l'énergie cinétique verticale des eaux transitant par ces orifices. En pratique, ces plaques seront généralement installées à une distance comprise entre 15 cm et 50 cm de la base du plancher du canal d'alimentation.

Selon une variante particulièrement intéressante de l'invention, lesdits moyens formant plaques déflectrices sont organisées en guide-flux de type « coin ». Une telle structure de guide flux, qui sera détaillé ci-après en référence à la description des modes de réalisation, permet d'inculquer une composante tangentielle à la vitesse des eaux dans le bassin et de favoriser ainsi l'obtention d'un mouvement rotationnel de celle-ci.

Selon une autre variante particulièrement intéressante de l'invention, lesdits moyens formant plaques déflectrices sont organisées en guide-flux de type « boîte ouverte ».

Une telle structure de guide flux permet d'inculquer une composante essentiellement tangentielle à la vitesse des eaux et de favoriser encore plus le mouvement rotation de celles-ci dans le bassin.

Egalement selon une variante, lesdits moyens formant plaques déflectrices incluent des plaques disposées en regard desdits orifices, au moins certaines desdites plaques, préférentiellement toutes lesdites plaques étant inclinées tangentiellement d'un angle δ1 compris entre 5° et 80° par rapport à l'horizontale.

Cette inclinaison des plaques en regard des orifices permet de favoriser le mouvement hélicoïdal des eaux. Lorsque les axes des orifices prévus dans le plancher du canal d'alimentation seront également inclinés comme décrit ci-dessus, ce mouvement hélicoïdal sera encore plus marqué.

Egalement selon une variante lesdits moyens formant plaques déflectrices incluent des plaques disposées en regard desdits orifices, au moins certaines desdites plaques, préférentiellement toutes lesdites plaques, étant inclinées tangentiellement d'un angle δ2 compris entre 5° et 80° par rapport à l'horizontale.

Une telle caractéristique permet d'accentuer encore la composante radiale du mouvement inculqué aux eaux.

Selon une variante de l'invention, lesdits moyens d'évacuation de ladite phase liquide forment un canal périphérique prévu à la périphérie dudit bassin, ledit canal ayant un radier commun avec le canal d'alimentation (2), les largeurs du canal d'évacuation et du canal d'alimentation variant inversement sur toute la périphérie dudit bassin de façon telle que la largeur du plancher (4) soit essentiellement constante.

Selon une autre variante, lesdits moyens d'évacuation de l'eau sont prévus au centre dudit bassin.

Préférentiellement, lesdits moyens formant jupe selon la présente invention sont solidarisés au canal d'alimentation en eaux à traiter et/ou aux moyens d'évacuation de la phase liquide.

L'invention, ainsi que les différents avantages qu'elle présente, seront plus facilement compris grâce à la description qui va suivre de deux modes non limitatifs de réalisation de celle-ci donnés en référence aux dessins, dans lesquels :
- la figure 1 représente un vue schématique en coupe transversale d'un dispositif de clarification selon la présente invention ;
- la figure 2 représente une vue schématique de dessus du dispositif selon la figure 1 ;
- la figure 3 représente une vue schématique en coupe tridimensionnelle d'une partie périphérique du dispositif, figurant dans le cercle référencée A sur la figure 1 ;
- la figure 4 représente une vue schématique en coupe selon le plan 2 de la figure 3 ;
- la figure 5 représente une vue schématique en coupe selon le plan radial 1 de la figure 3 ;
- la figure 6 représente des résultats de tests effectuées avec les deux modes de réalisation de l'invention décrits en référence aux figures 1 à 6 ;
- la figure 7 représente une vue schématique de dessus d'un second mode de réalisation de l'invention d'un dispositif selon la présente invention ;
- la figure 8 représente une vue schématique en coupe tridimensionnelle d'une partie du second mode de réalisation de la présente invention.

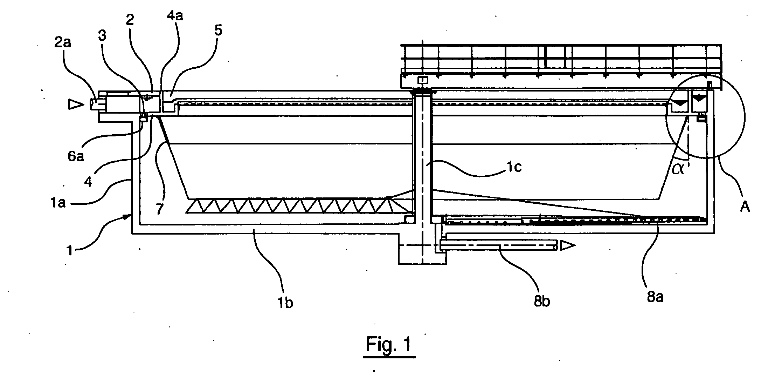

En référence à la figure 1, une vue schématique en coupe d'un exemple de réalisation d'un dispositif de séparation gravitaire pour le traitement des eaux selon l'invention est représentée.

Ce dispositif a pour objet la clarification d'eaux contenant des particules en suspension, et permet de séparer ces particules d'une phase liquide clarifiée.

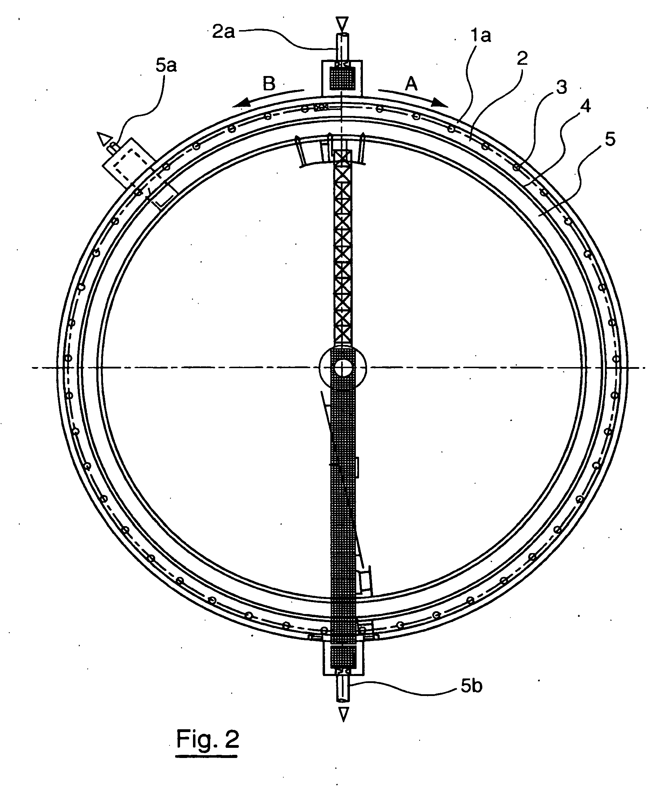

En référence aux figures 1 et 2, ce dispositif comprend un bassin 1 de forme circulaire de grandes dimensions (avec un diamètre de plus de 30 mètres) présentant une paroi latérale 1a et un fond essentiellement plat 1b.

Dans la partie supérieure de ce bassin 1 et à la périphérie de celui-ci, est prévu un canal d'alimentation 2 permettant d'alimenter en eaux à clarifier le bassin 1 et pourvu d'un plancher 4. L'eau à clarifier arrive dans le canal d'alimentation par une canalisation 2a et est distribuée dans celui-ci dans les deux directions opposées symbolisées par les flèches A et B

Le canal d'alimentation 2 est pourvu d'une pluralité d'orifices 3 espacés les uns des autres d'un distance constante de 1 m et présentant des axe verticaux prévus à 15 cm de la paroi latérale 1a. Ces orifices 3 traversent le plancher 4. Ces orifices présentent une hauteur de 200 mm et un diamètre de 75 mm.

Ces dimensions permettent aux eaux à traiter arrivant par le canal d'alimentation 2 de subir une perte de charge suffisante lorsqu'ils pénètrent à l'intérieur du bassin 1.

Le dispositif comprend par ailleurs des moyens d'évacuation des eaux clarifiées comprenant un canal 5 prévu dans la partie supérieure du bassin à la périphérie de celui-ci et partageant le même plancher (radier) 4 que le canal d'alimentation 2 en eaux à traiter dont il est séparé par une paroi essentiellement verticale 4a. Les eaux clarifiées sont ensuite évacuées par une canalisation 5a. Le canal 2 est également pourvue d'une sortie 5b servant à récupérer les flottants (mousse et écumes).

Comme on peut le voir sur la figure 2, les largeurs du canal d'évacuation 5 et du canal d'alimentation 2 varient inversement sur toute la périphérie dudit bassin 1 de façon telle que la largeur du plancher 4 soit essentiellement constante.

Le dispositif comprend par ailleurs des plaques déflectrices organisées en guide-flux prévues sous chacun des orifices 3 et qui seront décrits plus en détails ci-après.

Conformément à la présente invention, le dispositif représenté comprend par ailleurs une jupe 7 prévue à distance de la paroi interne 1a du bassin 1 réalisé en acier inoxydable.

Selon le présent mode de réalisation, cette jupe 7 est inclinée d'un angle α d'environ 30° par rapport à la verticale.

Enfin, de façon classique, le dispositif représenté comprend des moyens d'évacuation des particules séparées qui décantent au fond du bassin 1. Ces moyens incluent un tube collecteur 8a monté rotatif autour d'un pilier central 1c au fond du bassin et un canal d'évacuation 8 b des boues collectées par ce tube collecteur vers une bâche de pompage (non représentée).

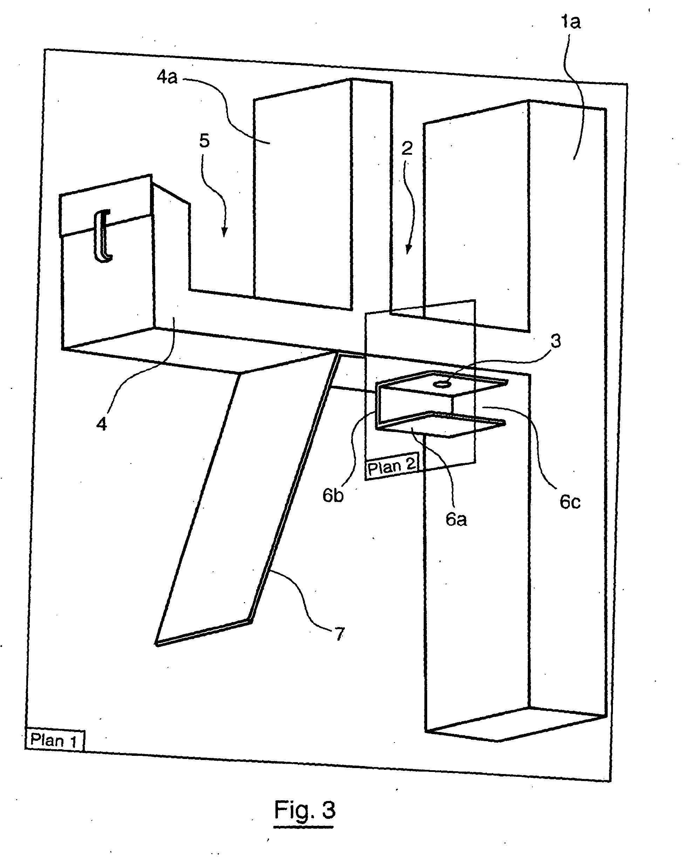

En référence à la figure 3, un guide flux est prévu sous chaque orifice 3. Chaque guide flux présente une forme « en coin » et est constitué d'une plaque 6a en regard d'un orifice 3 correspondant, d'une paroi 6c constituée par une partie de la paroi latérale 1 a et d'une autre plaque 6b perpendiculaire à la plaque 6a et à la paroi 6c. On notera que dans d'autres modes de réalisation, la paroi 6c pourra être remplacée par une plaque.

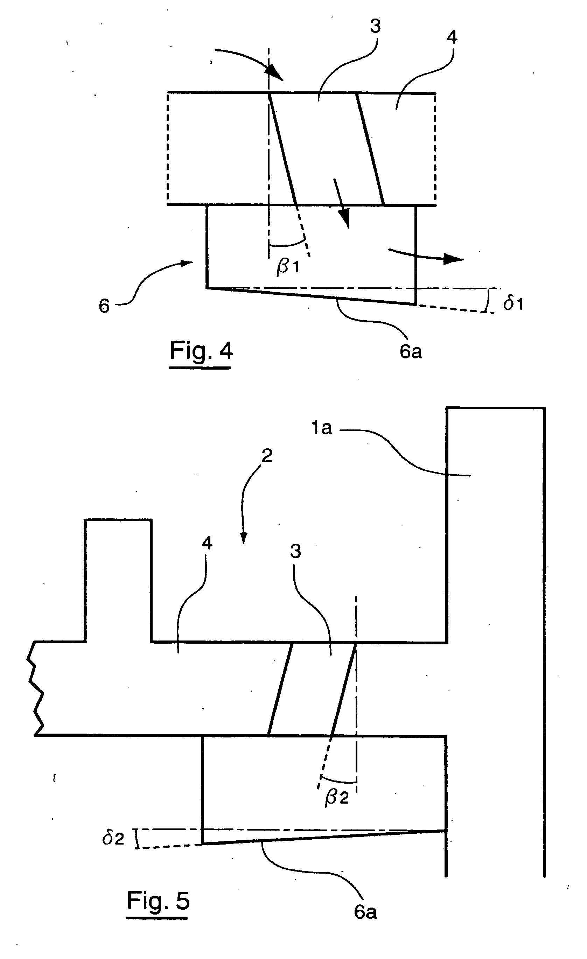

En référence à la figure 4, chaque orifice présente un axe incliné tangentiellement d'un angle β1 par rapport à la verticale. Dans le présent mode de réalisation cet angle β1 est d'environ 10°, mais selon les modes de réalisation il pourra aller jusqu'à 45°.

Toujours en référence à la figure 4, chaque plaque 6a est également inclinée tangentiellement d'un angle δ1 par rapport à l'horizontale. Dans le présent mode de réalisation cet angle δ1 est de 5° mais il pourra aller jusqu'à 80° dans d'autres modes de réalisation.

En référence à la figure 5, l'axe de chaque orifice est également incliné radialement d'un angle β2 par rapport à la verticale. Dans le présent mode de réalisation cet angle β2 est d'environ 10°, mais selon les modes de réalisation il pourra aller jusqu'à 45°.

Toujours en référence à la figure 5, chaque plaque 6a est également inclinée radialement d'un angle δ2 par rapport à l'horizontale. Dans le présent mode de réalisation cet angle δ2 est de 5° mais il pourra aller jusqu'à 80° dans d'autres modes de réalisation.

L'inclinaison de la jupe 7 permet d'éviter la perturbation du lit de boues constitué par les matières décantées présentes dans le fond du bassin et qui n'ont pas encore été aspirées par le tube rotatif 8a.

Cette inclinaison permet aussi de favoriser l'équirépartition des eaux dans le bassin, et donc l'équirépartition des particules à décanter qu'elles contiennent.

Cette inclinaison permet également de minimiser les courts-circuits, c'est-à-dire le retour des eaux dans le canal d'évacuation 5 avant que celles-ci n'aient eu le temps d'être clarifiées.

L'inclinaison tant tangentielle que radiale des orifices 3, ainsi que l'inclinaison tant tangentielle que radiale des plaques 6a des guide-flux, permet d'inculquer aux eaux arrivant dans le bassin un mouvement rotationnel hélicoïdal. Un tel mouvement tridimensionnel permet d'augmenter le chemin parcouru par l'eau dans le bassin et ainsi d'augmenter l'efficacité de traitement du clarificateur. Cette architecture permet également de favoriser l'équirépartition des eaux dans le bassin.

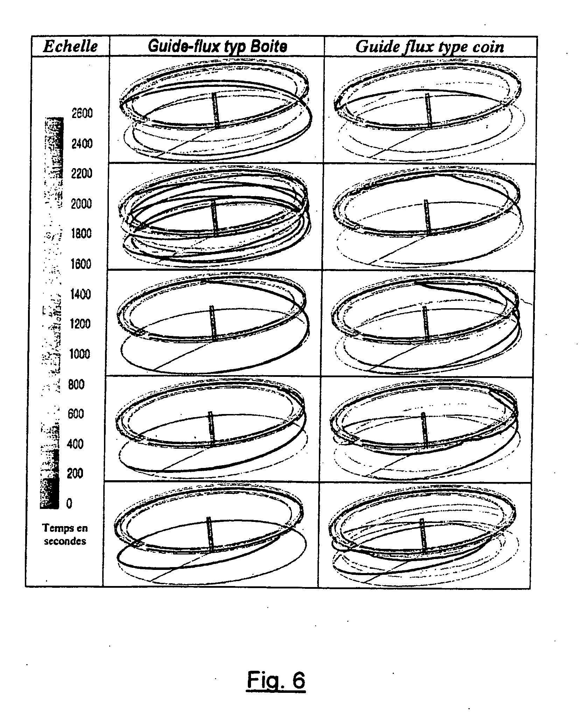

Afin de mettre en évidence le mouvement rotationnel tridimensionnel des eaux obtenu grâce à l'invention, les deux modes de réalisation décrits ci-dessus ont été mis en oeuvre avec de eaux contenant des particules traçables. Le parcours de celles-ci dans le bassin 1 a été suivi dans le temps. Cinq essais ont été réalisés pour chaque mode de réalisation. Les résultats sont données à la figure 6.

Selon cette figure, on constate que les particules ont bien un mouvement tridimensionnel dans le bassin avec un composante tangentielle forte due à structure des guide-flux et à l'inclinaison des orifices mais également avec un composante radiale due en outre à l'inclinaison de la jupe 7 permettant aux particules d'occuper l'essentiel du volume du bassin.

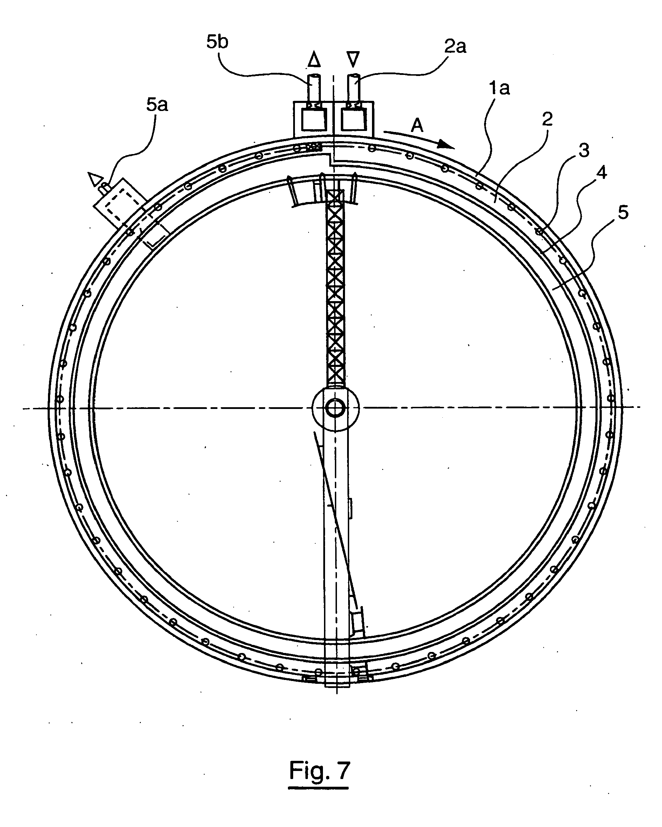

Dans un second mode de réalisation de l'invention représenté à la figure 7 sur laquelle les références numériques représentent des éléments identiques ou similaires à ceux figurant sur la figure 2, le dispositif représenté montre un diamètre (par exemple 25 mètres) plus faible que celui selon le premier mode de réalisation. Dans ce mode de réalisation, les eaux sont distribuées dans le canal d'alimentation dans une seule direction symbolisées par la flèche A.

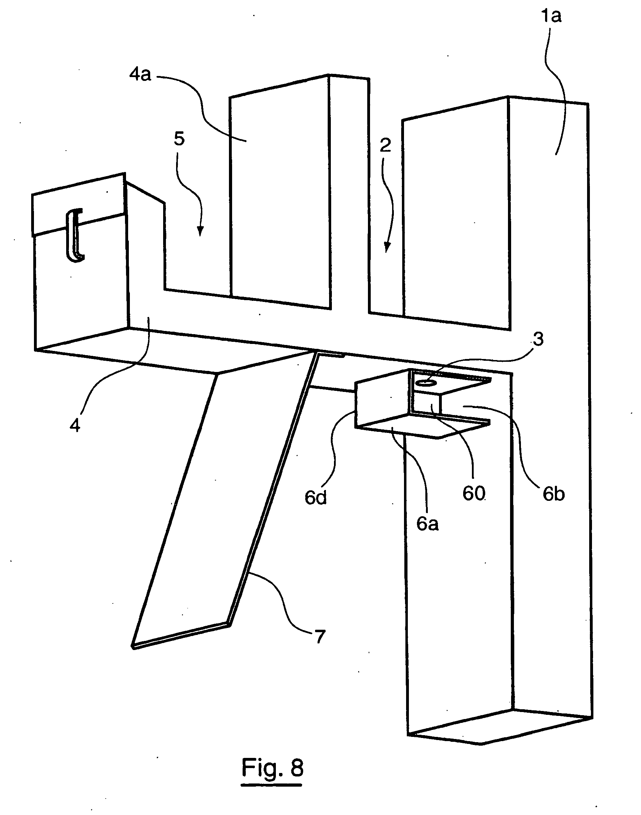

Dans ce mode de réalisation, les guide-flux utilisés sont de type « boîte ouverte » comme représenté sur la figure 8. Selon ce mode de réalisation, une plaque supplémentaire 6d est prévue parallèle à la partie de paroi 6b. Grâce à de tels guide-flux, le mouvement des eaux arrivant dans le bassin présente une composante tangentielle plus forte que dans le premier mode de réalisation décrit ci-dessus.

Les modes de réalisation de l'invention ici décrits n'ont pas pour objectif de réduire la portée de l'invention définie par les revendications.

## Revendications

1. Dispositif de séparation gravitaire pour le traitement des eaux permettant de séparer des particules en suspension d'une phase liquide, ledit dispositif comprenant un bassin circulaire (1), au moins un canal d'alimentation (2) en eaux dudit bassin prévu à la périphérie de celui-ci, une pluralité d'orifices (3) prévus dans le plancher (4) dudit canal, des moyens formant plaques déflectrices (6a,6b,6c) prévues sous lesdits orifices, des moyens formant jupe (7) prévus à distance de la paroi interne (1a) dudit bassin (1), des moyens d'évacuation (5,5a) de ladite phase liquide et des moyens d'évacuation (8a,8b) desdites particules séparées,
**caractérisé en ce que** lesdits moyens formant jupe (7) sont inclinées vers l'intérieur dudit bassin selon un angle α compris entre 5° et 80 ° par rapport à la verticale.

2. Dispositif selon la revendication 1, **caractérisé en ce que** ledit angle α est compris entre environ 30° et environ 60°.

3. Dispositif selon l'une des revendications 1 ou 2, **caractérisé en ce que** lesdits orifices (3) présentent un diamètre compris entre 50 et 200 mm.

4. Dispositif selon l'une quelconque des revendications 1 à 3, **caractérisé en ce que** lesdits orifices (3) présentent une hauteur comprise entre 150 et 600 mm.

5. Dispositif selon l'une quelconque des revendications 1 à 4, **caractérisé en ce que** lesdits orifices (3) du canal d'alimentation (2) en eaux à traiter sont espacés les uns des autres d'une distance essentiellement constante comprise entre 500 et 3000 mm.

6. Dispositif selon l'une quelconque des revendications 1 à 5, **caractérisé en ce qu'**au moins certains desdits orifices (3), préférentiellement tous les orifices (3), présentent un axe incliné tangentiellement (1) d'un angle β1 inférieur à 45° par rapport à la verticale.

7. Dispositif selon l'une quelconque des revendications 1 à 6, **caractérisé en ce qu'**au moins certains desdits orifices (3), préférentiellement tous les orifices (3), présentent un axe incliné radialement d'un angle β2 inférieur à 45° par rapport à la verticale.

8. Dispositif selon l'une quelconque des revendications 1 à 7 **caractérisé, en ce que** lesdits moyens formant plaques déflectrices (6) sont organisées en guide-flux de type « coin ».

9. Dispositif selon l'une quelconque des revendications 1 à 7 **caractérisé, en ce que** lesdits moyens formant plaques déflectrices (6) sont organisées en guide-flux de type « boite ouverte ».

10. Dispositif selon l'une quelconque des revendications 1 à 9 **caractérisé en ce que** lesdits moyens formant plaques déflectrices incluent des plaques (6a) disposées en regard desdits orifices (3), au moins certaines desdites plaques (6a), préférentiellement toutes lesdites plaques, étant inclinées tangentiellement d'un angle δ1 compris entre 5° et 80° par rapport à l'horizontale.

11. Dispositif selon l'une quelconque des revendications 1 à 10 **caractérisé en ce que** lesdits moyens formant plaques déflectrices incluent des plaques (6a) disposées en regard desdits orifices(3), au moins certaines desdites plaques(6a), préférentiellement toutes lesdites plaques, étant inclinées radiallement d'un angle δ2 compris entre 5° et 80° par rapport à l'horizontale.

12. Dispositif selon l'une quelconque des revendications 1 à 11, **caractérisé en ce que** lesdits moyens d'évacuation de ladite phase liquide incluent un canal périphérique (5) prévu à la périphérie dudit bassin, ledit canal (5) ayant un plancher (4) commun avec le canal d'alimentation (2), les largeurs du canal d'évacuation et du canal d'alimentation (5) variant inversement sur toute la périphérie dudit bassin de façon telle que la largeur du plancher (4) soit essentiellement constante.

13. Dispositif selon l'une quelconque des revendications 1 à 11, **caractérisé en ce que** lesdits moyens d'évacuations de l'eau sont prévus au centre dudit bassin.

14. Dispositif selon l'une quelconque des revendications 1 à 13, **caractérisé en ce que** lesdits moyens formant jupe (7) sont solidarisés au canal d'alimentation (2) en eaux à traiter et/ou aux moyens d'évacuation (5) de la phase liquide.

## Claims

1. Gravitational separation device for the treatment of water, making it possible to separate suspended particles from a liquid phase, which device includes a circular basin (1), at least one channel (2) for supplying water to said basin provided at the periphery thereof, a plurality of openings (3) provided in the floor (4) of said channel, means forming deflective plates (6a, 6b, 6c) provided under said openings, means forming a skirt (7) provided at a distance from the internal wall (1a) of said basin (1), means for discharging (5, 5a) said liquid phase and means for discharging (8a, 8b) said separated particles,
**characterised in that** said means forming a skirt (7) are inclined toward the interior of said basin according to an angle α of between 5° and 80° with respect to the vertical.

2. Device according to claim 1, **characterised in that** said angle α is between around 30° and 60°.

3. Device according to one of claims 1 or 2, **characterised in that** said openings (3) have a diameter of between 50 and 200 mm.

4. Device according to any one of claims 1 to 3, **characterised in that** said openings (3) have a height of between 150 and 600 mm.

5. Device according to any one of claims 1 to 4, **characterised in that** said openings (3) in the channel (2) for supplying water to be treated are spaced apart from one another by an essentially constant distance of between 500 and 3000 mm.

6. Device according to any one of claims 1 to 5, **characterised in that** at least some of said openings (3), preferably all of the openings (3), have an axis tangentially inclined (1) by an angle β1 of less than 45° with respect to the vertical.

7. Device according to any one of claims 1 to 6, **characterised in that** at least some of said openings (3), preferably all of the openings (3), have an axis radially inclined by an angle β2 of less than 45° with respect to the vertical.

8. Device according to any one of claims 1 to 7, **characterised in that** said means forming deflective plates (6) are organised in a "corner"-type flow guide.

9. Device according to any one of claims 1 to 7, **characterised in that** said means forming deflective plates (6) are organised in an "open-box"-type flow guide.

10. Device according to any one of claims 1 to 9, **characterised in that** said means forming deflective plates include plates (6a) arranged opposite said openings (3), at least some of which plates (6a), preferably all of said plates, being inclined tangentially by an angle δ1 of between 5° and 80° with respect to the horizontal.

11. Device according to any one of claims 1 to 10, **characterised in that** said means forming deflective plates include plates (6a) arranged opposite said openings (3), at least some of which plates (6a), preferably all of said plates, being inclined radially by an angle δ2 of between 5° and 80° with respect to the horizontal.

12. Device according to any one of claims 1 to 11, **characterised in that** said means for discharging said liquid phase form a peripheral channel (5) provided at the periphery of said basin, which channel (5) has a floor (4) common with the supply channel (2), with the widths of the discharge channel and the supply channel (5) varying inversely over the entire periphery of said basin so that the width of the floor (4) is essentially constant.

13. Device according to any one of claims 1 to 11, **characterised in that** said water discharge means are provided at the centre of said basin.

14. Device according to any one of claims 1 to 13, **characterised in that** said means forming a skirt (7) are secured to the channel (2) for supplying water to be treated and/or means for discharging (5) the liquid phase.

## Patentansprüche

1. Schwerkraft-Trennvorrichtung zur Wasserbehandlung, welche das Abtrennen von in einer flüssigen Phase in Suspension befindlichen Partikeln ermöglicht, wobei die besagte Vorrichtung ein kreisförmiges Becken (1), mindestens einen am Umfang des Beckens angebrachten Wasserzufuhrkanal (2) für das besagte Becken, eine Vielzahl von Öffnungen (3) im Boden (4) des besagten Kanals, Mittel, die Ablenkungsplatten (6a, 6b, 6c) unter den besagten Öffnungen bilden, Mittel, die eine Schürze (7) bilden und in einer Entfernung der Innenwand (1a) des besagten Beckens (1) angebracht sind, Mittel zum Abführen (5, 5a) der besagten flüssigen Phase und Mittel zum Abführen (8a, 8b) der besagten abgetrennten Teilchen aufweist,
**dadurch gekennzeichnet, dass** die eine Schürze (7) bildenden Mittel zum Inneren des Beckens hin unter einem Winkel α geneigt sind, der zwischen 5° und 80° im Verhältnis zur Vertikalen Richtung beträgt.

2. Vorrichtung nach Anspruch 1, **dadurch gekennzeichnet, dass** der besagte Winkel α zwischen etwa 30° und etwa 60° beträgt.

3. Vorrichtung nach einem der Ansprüche 1 oder 2, **dadurch gekennzeichnet, das** der Durchmesser der besagten Öffnungen (3) zwischen 50 und 200 mm liegt.

4. Vorrichtung nach einem der Ansprüche 1 bis 3, **dadurch gekennzeichnet, das** die Höhe der besagten Öffnungen (3) zwischen 150 und 600 mm beträgt.

5. Vorrichtung nach einem der Ansprüche 1 bis 4, **dadurch gekennzeichnet, das** die besagten Öffnungen (3) des Zufuhrkanals (2) für das zu behandelnde Wasser untereinander einen im Wesentlichen konstanten Abstand aufweisen, der zwischen 500 und 3000 mm liegt.

6. Vorrichtung nach einem der Ansprüche 1 bis 5, **dadurch gekennzeichnet, das** mindestens einige der besagten Öffnungen (3), und bevorzugterweise alle Öffnungen (3), eine Achse (1) aufweisen, die tangential geneigt ist, und zwar um einen Winkel β1, der weniger als 45° im Verhältnis zur vertikalen Richtung beträgt.

7. Vorrichtung nach einem der Ansprüche 1 bis 6, **dadurch gekennzeichnet, das** mindestens einige der besagten Öffnungen (3) und bevorzugterweise alle Öffnungen (3) eine Achse aufweisen, die radial geneigt ist, und zwar um einen Winkel β2, der weniger als 45° im Verhältnis zur vertikalen Richtung beträgt.

8. Vorrichtung nach einem der Ansprüche 1 bis 7, **dadurch gekennzeichnet, das** die besagten Ablenkplatten (6) bildenden Mittel als Strömungsführungen vom Typ "Keil" ausgebildet sind.

9. Vorrichtung nach einem der Ansprüche 1 bis 7, **dadurch gekennzeichnet, das** die besagten Ablenkplatten (6) bildenden Mittel als Strömungsführungen vom Typ "offener Kasten" ausgebildet sind.

10. Vorrichtung nach einem der Ansprüche 1 bis 9, **dadurch gekennzeichnet, das** die besagten Ablenkplatten bildenden Mittel Platten (6a) umfassen, die den besagten Öffnungen (3) gegenüber angebracht sind, wobei mindestens einige der besagten Platten (6a) und bevorzugterweise alle diese Platten tangential um einen Winkel δ1 geneigt sind, der zwischen 5° und 80° im Verhältnis zur horizontalen Richtung beträgt.

11. Vorrichtung nach einem der Ansprüche 1 bis 10, **dadurch gekennzeichnet, das** die besagten Ablenkplatten bildenden Mittel Platten (6a) umfassen, die den besagten Öffnungen (3) gegenüber angebracht sind, wobei mindestens einige der besagten Platten (6a) und bevorzugterweise alle diese Platten radial um einen Winkel δ2 geneigt sind, der zwischen 5° und 80° im Verhältnis zur horizontalen Richtung beträgt.

12. Vorrichtung nach einem der Ansprüche 1 bis 11, **dadurch gekennzeichnet, das** die besagten Ablaufmittel der besagten flüssigen Phase einen umlaufenden Kanal (5) umfassen, der am Umfang des besagten Beckens angebracht ist, wobei der besagte Kanal (5) einen Boden (4) aufweist, der dem Zufuhrkanal (2) gemeinsam ist, wobei die Breiten des Ablaufkanals und des Zufuhrkanals (5) umgekehrt zueinander derart über den gesamten Umfang des besagten Beckens variieren, dass die Breite des Bodens (4) im Wesentlichen konstant ist.

13. Vorrichtung nach einem der Ansprüche 1 bis 11, **dadurch gekennzeichnet, das** die besagten Wasserablaufmittel in der Mitte des besagten Beckens angebracht sind.

14. Vorrichtung nach einem der Ansprüche 1 bis 13, **dadurch gekennzeichnet, das** die besagten eine Schürze bildenden Mittel (7) mit dem Zufuhrkanal (2) für das zu behandelnde Wasser und/oder mit den Ablaufmitteln (5) für die flüssige Phase verbunden sind.
